# EUROPÄISCHE PATENTSCHRIFT

(11) **EP 0 614 782 B1**
(45) Veröffentlichungstag und Bekanntmachung des Hinweises auf die Patenterteilung: **01.07.1998**
(21) Anmeldenummer: 94102846.6
(22) Anmeldetag: 25.02.1994
(51) Int. Cl.: B60R 1/06

(54) **Aussenrückblickspiegel für Fahrzeuge, vorzugsweise für Kraftfahrzeuge**
External rear view mirror for vehicles, preferably for motor vehicles
Rétroviseur extérieur pour véhicules, de préférence pour véhicules à moteur

(30) Priorität: 12.03.1993 DE 4307821
(43) Veröffentlichungstag der Anmeldung: 14.09.1994
(73) Patentinhaber: REITTER & SCHEFENACKER GmbH & Co. KG, D-73730 Esslingen (DE)
(72) Erfinder: Leonberger, Karl-Heinz, D-73269 Hochdorf (DE)
(74) Vertreter: Jackisch-Kohl, Anna-Katharina

(56) Entgegenhaltungen:
- EP-A- 0 074 886
- EP-A- 0 334 986
- DE-A- 2 848 414
- GB-A- 1 510 754
- US-A- 5 177 642
- PATENT ABSTRACTS OF JAPAN vol. 12, no. 57 (M-670) (2904) 20. Februar 1988 & JP-A-62 203 843 (MURAKAMI KAIMEIDOU K.K.) 8. September 1987

## Beschreibung

Die Erfindung betrifft einen Außenrückblickspiegel für Fahrzeuge, vorzugsweise für Kraftfahrzeuge nach dem Oberbegriff des Anspruches 1.

Bei einem bekannten Außenrückblickspiegel dieser Art (EP-A-0 334 986) ist zur Verstellung der Glasträgerplatte der Betätigungshebel vorgesehen, der da mit einem ersten Hebelarm verbunden ist. Als Zwischenhebel ist ein Gelenkteil vorgesehen, der auf dem Hebel gelenkig gelagert ist. Dieser Gelenkteil hat di beiden übereinander angeordneten Arme, die an ihrem freien Ende jeweils eine Lagerkugel aufweisen, auf denen jeweils ein Stößel gelagert ist. Das Gelenkteil, das als einarmiger Hebel ausgebildet ist, ist infolge der beiden Arme konstruktiv aufwendig ausgebildet. Infolge der einarmigen Ausbildung ergeben sich auch nur geringe Verstellwege für das Gelenkteil und damit für die Glasträgerplatte.

Bei diesem bekannten Außenrückblickspiegel kann der Betätigungshebel auch gelenkig mit dem Hebel verbunden sein, der den Zwischenhebel bildet. In diesem Fall ist eine zusätzliche Gelenkverbindung zwischen dem Hebel und dem Gelenkteil vorhanden. Somit wird die Bewegung des Betätigungshebels über insgesamt vier Gelenkstellen auf die Glasträgerplatte übertragen. Die erste Gelenkverbindung ist zwischen dem Betätigungshebel und dem unteren Ende des Hebels vorgesehen. Die zweite Gelenkverbindung befindet sich zwischen dem oberen Ende des Hebels und dem Gelenkteil. Als dritte Gelenkverbindung ist die Verbindung der Arme des Gelenkteiles mit den Stößeln anzusehen, die ihrerseits über die vierte Gelenkverbindung an der Rückseite der Glasträgerplatte angelenkt sind. Dieser bekannte Außenrückblickspiegel ist konstruktiv äußerst aufwendig ausgebildet.

Der Erfindung liegt die Aufgabe zugrunde, den gattungsgemäßen Außenrückblickspiegel so auszubilden, daß er bei konstruktiv einfacher Ausbildung kostengünstig gefertigt und einfach montiert werden kann.

Diese Aufgabe wird beim gattungsgemäßen Außenrückblickspiegel erfindungsgemäß mit den kennzeichnenden Merkmalen des Anspruches 1 gelöst.

Beim erfindungsgemäßen Außenrückblickspiegel ist der Zwischenhebel, der gelenkig mit dem Betätigungshebel verbunden ist, als Zweiarmiger Hebel ausgebildet. Dadurch ist es möglich, daß der Zwischenhebel bei kleinen Verstellwegen des Betätigungshebels große Verstellwege zurücklegt. Die Glasträgerplatte läßt sich dadurch sehr einfach um große Wege verstellen. Der Zwischenhebel ist mit dem sich quer zu ihm erstreckenden Querstück versehen, das über die Lagerkugeln gelenkig mit den Stößeln verbunden ist. Infolge der erfindungsgemäßen Ausbildung hat der Außenrückblickspiegel eine konstruktiv äußerst einfache Ausbildung. Der Zwischenhebel mit dem Querstück ist ein einziges Bauteil, das einfach gefertigt und einfach montiert werden kann. Gerade bei Massenartikeln, wie es Außenrückblickspiegeln sind, ist diese einfache Ausbildung und leichte und damit kostengünstige Montage des Außenrückblickspiegels besonders vorteilhaft.

Weitere Merkmale der Erfindung ergeben sich aus den weiteren Ansprüchen, der Beschreibung und den Zeichnungen.

Die Erfindung wird anhand dreier in den Zeichnungen dargestellter Ausführungsbeispiele näher erläutert. Es zeigen
- Fig. 1: in einem Querschnitt eine erste Ausführungsform eines erfindungsgemäßen Außenrückblickspiegels, dessen Glasträgerplatte eine Mittelstellung einnimmt,
- Fig. 2: in einer Darstellung entsprechend Fig. 1 den Außenrückblickspiegel, dessen Glasträgerplatte um eine vertikale Achse verschwenkt ist,
- Fig. 3: einen Längsschnitt durch den Außenrückblickspiegel gemäß Fig. 1,
- Fig. 4: in einer Darstellung entsprechend Fig. 3 den Außenrückblickspiegel mit der um eine horizontale Achse verschwenkten Glasträgerplatte,
- Fig. 5 bis Fig. 8: in Darstellungen entsprechend den Fig. 1 bis 4 eine zweite Ausführungsform eines erfindungsgemäßen Außenrückblickspiegels,
- Fig. 9 bis Fig. 12: in Darstellungen entsprechend den Fig. 1 bis 4 eine dritte Ausführungsform eines erfindungsgemäßen Außenrückblickspiegels.

Der Außenrückblickspiegel ist für Fahrzeuge, insbesondere für Kraftfahrzeuge, vorgesehen und hat eine Glasträgerplatte 3, die vom Fahrzeuginneren aus um zueinander senkrechte Achsen sowohl horizontal als auch vertikal verstellt werden kann. Der Außenrückblickspiegel hat einen Spiegelfuß 1, mit dem er in bekannter Weise an der Karosserie des Fahrzeuges befestigt wird. Mit dem Spiegelfuß ist ein Spiegelgehäuse 2 vorzugsweise in und entgegen Fahrtrichtung F des Fahrzeuges abklappbar verbunden. Da diese Klappverbindung bei Außenrückblickspiegeln bekannt ist, wird sie nicht näher beschrieben. Die Glasträgerplatte 3 ist innerhalb des Spiegelgehäuses 2 untergebracht und über ein Kugelgelenk 5 mit einem Träger 4 gelenkig verbunden, der fest mit dem Spiegelgehäuse 2 verbunden ist. Der Träger 4 weist eine Kugel 6 auf, auf der die Glasträgerplatte 3 mit einer Lagerschale 7 liegt, die vorzugsweise einstückig mit der Glasträgerplatte 3 ausgebildet ist. Die Lagerschale 7 ist mit Abstand zumindest teilweise von einem Ring 8 umgeben, der ebenfalls vorzugsweise einstückig mit der Glasträgerplatte ausgebildet ist.

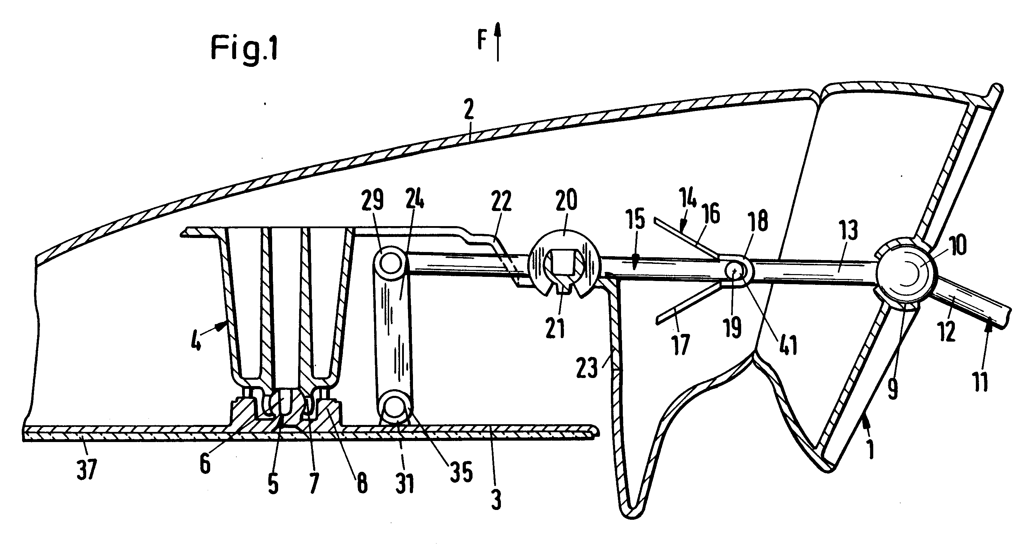

Im Spiegelfuß 1 ist in einer Lagerschale 9 eine Kugel 10 gelagert, die Teil eines Betätigungshebels 11 ist, mit dem sie vorzugsweise einstückig ausgebildet ist. Der Betätigungshebel 11 ragt in das Fahrzeuginnere und ist dort mit einer (nicht dargestellten) Handhabe versehen, mit der der Fahrzeuginsasse in noch zu beschreibender Weise die Glasträgerplatte 3 verstellen kann. Der Betätigungshebel 11 ist als zweiarmiger Hebel ausgebildet, dessen beide Arme 12 und 13 stumpfwinklig zueinander liegen. Der innere Arm 13 erstreckt sich von der Kugel 10 aus durch den Spiegelfuß 1 bis in das Spiegelgehäuse 2. Am freien Ende ist der Arm 13 mit einer Rastaufnahme 14 versehen, mit der ein Zwischenhebel 15 gelenkig verbunden ist. Die Rastaufnahme 14 hat zwei in Richtung auf ihre freien Enden divergierende Arme 16 und 17, die durch ein im Querschnitt U-förmiges Verbindungsstück 18 miteinander verbunden sind. In ihm wird das eine Ende des Zwischenhebels 15 verrastet. Wird das Spiegelgehäuse 2 gegenüber dem Spiegelfuß abgeklappt, dann rastet der Zwischenhebel 15 aus der Rastaufnahme 14 aus. Wird das Spiegelgehäuse 2 wieder in die Betriebsstellung gemäß Fig. 1 zurückgeklappt, dann findet der Zwischenhebel 15 aufgrund der divergierenden Arme 16 und 17 der Rastaufnahme 14 selbsttätig in die Raststellung zurück.

Der Zwischenhebel 15 ist derart im Verbindungsstück 18 der Rastaufnahme 14 gelagert, daß er gegenüber der Rastaufnahme um eine, bezogen auf die in Fig. 1 dargestellte Mittelstellung der Glasträgerplatte 3, in Höhenrichtung liegende Achse 19 schwenken kann.

Der Zwischenhebel 15 weist vorteilhaft in halber Länge eine Lagerschale 20 auf, die drehbar auf einer Kugel 21 gelagert ist, die am Träger 4 vorgesehen ist. Vorzugsweise ist die Kugel 21 einstückig mit dem Träger 4 ausgebildet. Der Zwischenhebel 15 ragt durch eine Öffnung 22 im Träger 4, der mit einer Wand eines Rahmens 23 stoßend an die Wandung des Spiegelgehäuses 2 anschließt.

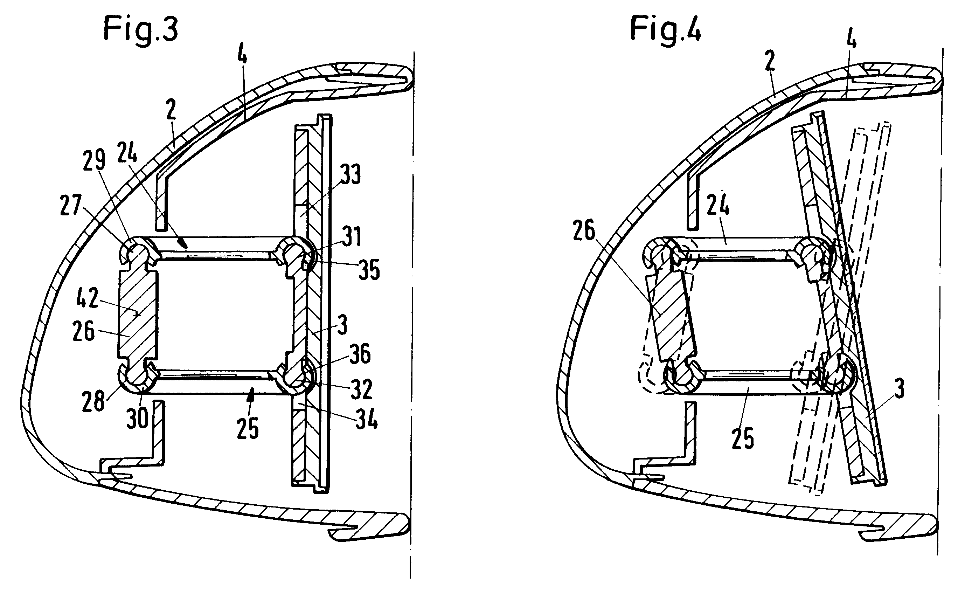

Die Kugel 21 des Trägers 4 ist am Rahmen 23 vorgesehen. Die Rastaufnahme 14 des Betätigungshebels 11 liegt auf der dem Spiegelfuß 1 zugewandten Seite der Rahmenwand. Das der Rastaufnahme 14 gegenüberliegende Ende des Zwischenhebels 15 ist mit zwei Stößeln 24 und 25 (Fig. 3 und 4) gelenkig verbunden, die ihrerseits an die Rückwand der Glasträgerplatte 3 angelenkt sind. Die beiden Stößel 24, 25 liegen, in Richtung der Schwenkachse 19 des Zwischenhebels 15 gesehen, deckungsgleich übereinander, wenn die Glasträgerplatte 3 ihre Mittelstellung (Fig. 1) einnimmt.

Der Zwischenhebel 15 ist an seinem von der Rastaufnahme 14 abgewandten Ende mit einem Querstück 26 (Fig. 3) versehen, das mit Abstand von der Glasträgerplatte 3 liegt und am oberen und unteren Ende jeweils eine Lagerkugel 27 und 28 aufweist. Beide Lagerkugeln sind vorteilhaft einstückig mit dem Querstück 26 ausgebildet, das ebenfalls vorteilhaft einstückig mit dem Zwischenhebel 15 ausgebildet ist. Der Zwischenhebel 15 kann die gleiche Höhe und Breite wie das Querstück 26 aufweisen. Es ist aber auch möglich, den Zwischenhebel 15 als verhältnismäßig dünnen Arm auszubilden, an den das Querstück 26 rechtwinklig anschließt.

Die beiden Stößel 24 und 25 sind mit jeweils einer Lagerschale 29 und 30 auf den Lagerkugeln 27, 28 des Querstückes 26 gelagert. Der Stößel 24 ist mit seiner Lagerschale 29 von oben auf die Lagerkugel 27 aufgesetzt, während der untere Stößel 25 mit seiner Lagerschale 30 von unten die Lagerkugel 28 umgreift.

Die Glasträgerplatte 3 ist an der Rückseite mit zwei übereinander liegenden Lagerkugeln 31 und 32 versehen (Fig. 3), die vorzugsweise einstückig mit der Glasträgerplatte ausgebildet sind. Die Lagerkugeln 31 und 32 stehen über einen Teil ihrer Dicke über die Rückseite der Glasträgerplatte 3 vor und liegen im Bereich von Öffnungen 33, 34 der Glasträgerplatte. Auf die nach oben ragende Lagerkugel 31 ist der obere Stößel 34 mit einer an seinem anderen Ende vorgesehenen Lagerschale 35 aufgesetzt. Die Lagerkugel 32 ragt nach unten und trägt eine am anderen Ende des unteren Stößels 25 vorgesehene Lagerschale 36, die von unten auf die Lagerkugel 32 aufgesetzt ist. Auf diese Weise sind die beiden Stößel 24, 25 mit den an ihren Enden vorgesehenen Lagerschalen 29, 30 und 35, 36 gelenkig auf den Lagerkugeln 27, 28 und 31, 32 gelagert. Wie Fig. 1 zeigt, liegen die Lagerkugeln 31, 32 der Glasträgerplatte 3 mit Abstand vom Kugelgelenk 5 auf der dem Spiegelfuß 1 zugewandten Seite.

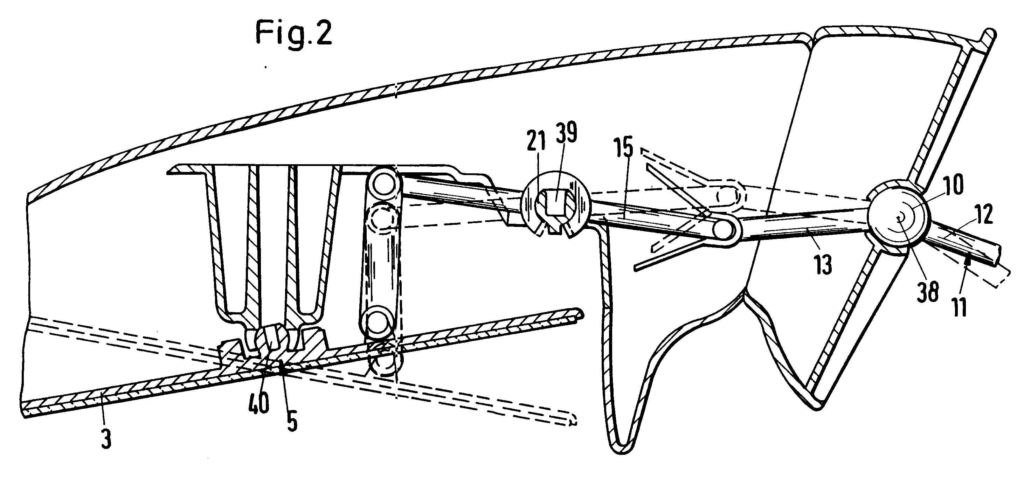

Fig. 1 zeigt die Glasträgerplatte 3 mit dem Spiegelglas 37 in der Neutral- bzw. Mittelstellung. In dieser Lage erstreckt sich das Spiegelglas 37 in vertikaler Richtung sowie senkrecht zur Längsachse der Stößel 24, 25. Durch Schwenken des Betätigungshebels 11 um eine parallel zur Schwenkachse 19 liegende Achse 38, die durch den Mittelpunkt der Lagerkugel 10 verläuft, läßt sich die Glasträgerplatte 3 aus der Mittelstellung gemäß Fig. 1 in die verschwenkte Stellung gemäß Fig. 2 bringen. Infolge der Anordnung der Arme 12 und 13 des Betätigungshebels 11 rechts und links von der Lagerkugel 10 wird bei dieser Schwenkbewegung der Zwischenhebel 15 gegensinnig um eine zur Schwenkachse 38 parallele Achse 39 geschwenkt, die durch den Mittelpunkt der Lagerkugel 21 verläuft. Über die Stößel 24, 25 wird dadurch die Glasträgerplatte 3 in die entsprechende Lage geschwenkt. Die Schwenkachse 40 der Glasträgerplatte 3 verläuft durch den Mittelpunkt der Kugel 6 des Kugelgelenkes 5. Dabei schwenken der Zwischenhebel 15 und die Glasträgerplatte 3 relativ zu den Stößeln 24, 25, mit denen sie in der beschriebenen Weise gelenkig verbunden sind.

In Fig. 2 ist mit ausgezogenen Linien diejenige Lage der Verstelleinrichtung dargestellt, die sich ergibt, wenn der Betätigungshebel 11 entgegen dem Uhrzeigersinn um die Achse 38 geschwenkt wird. Wird der Betätigungshebel 11 um die vertikale Achse 38 im Uhrzeigersinn geschwenkt (gestrichelte Linien in Fig. 2), wird der Zwischenhebel 15 dementsprechend gegen den Uhrzeigersinn um die Achse 39 verschwenkt. Dadurch werden die Stößel 24, 25 entsprechend verschoben und die Glasträgerplatte 3 um die Achse 40 in die andere Richtung geneigt.

Infolge der kugelgelenkigen Verbindung der Stößel 24, 25 mit dem Zwischenhebel 15 und der Glasträgerplatte 3 ist es auch möglich, die Glasträgerplatte nicht nur um eine vertikale, sondern auch um eine gedachte horizontale Achse zu verschwenken. Fig. 3 zeigt die Ausgangslage der Glasträgerplatte 3 entsprechend Fig. 1. Die beiden Stößel 24, 25 liegen in dieser Lage deckungsgleich übereinander. Um die Glasträgerplatte 3 in die geneigte Lage gemäß Fig. 4 verstellen zu können, wird der Betätigungshebel 11 (Fig. 1 und 2) mit seiner Kugel 10 in der Lagerschale 9 des Spiegelfußes 1 gedreht. Über die Rastaufnahme 14 wird hierbei auch der Zwischenhebel 15 mit seiner Lagerschale 20 auf der Kugel 21 des Trägers 4 entsprechend gedreht. Wie Fig. 1 zeigt, ist der Zwischenhebel 15 im Verbindungsstück 18 der Rastaufnahme 14 mit einem Querstück 41 gelagert, das sich senkrecht zur Längsrichtung des Schwenkarmes 15 erstreckt. Über dieses Querstück 41 wird der Zwischenhebel 15 bei der beschriebenen Drehbewegung des Betätigungshebels 11 von der Rastaufnahme 14 mitgenommen.

Aufgrund der Drehbewegung des Zwischenhebels 15 wird das Querstück 26 um eine quer zu ihm liegende gedachte Achse 42 geschwenkt. Je nach Schwenkrichtung des Querstückes 26 wird die Glasträgerplatte 3 nach hinten (ausgezogene Linien in Fig. 4) oder nach vorne (gestrichelte Linien in Fig. 4) geschwenkt. Diese Schwenkbewegung ist möglich, weil die Stößel 24, 25 jeweils mit den Lagerschalen 29, 30, 35, 36 auf den Lagerkugeln 27, 28, 31, 32 gelagert sind.

Infolge der beschriebenen kugelgelenkigen Lagerung kann die Glasträgerplatte 3 in jede gewünschte Neigungs- und Schwenkstellung verstellt werden. Bei der beschriebenen Ausführungsform wird die Glasträgerplatte 3 über die Stößel 24, 25, den Zwischenhebel 15 und den Betätigungshebel 11 mechanisch verstellt. Infolge der versetzten Verstellachse wird in konstruktiv einfacher Weise eine räumliche Verstellbarkeit der Glasträgerplatte erreicht.

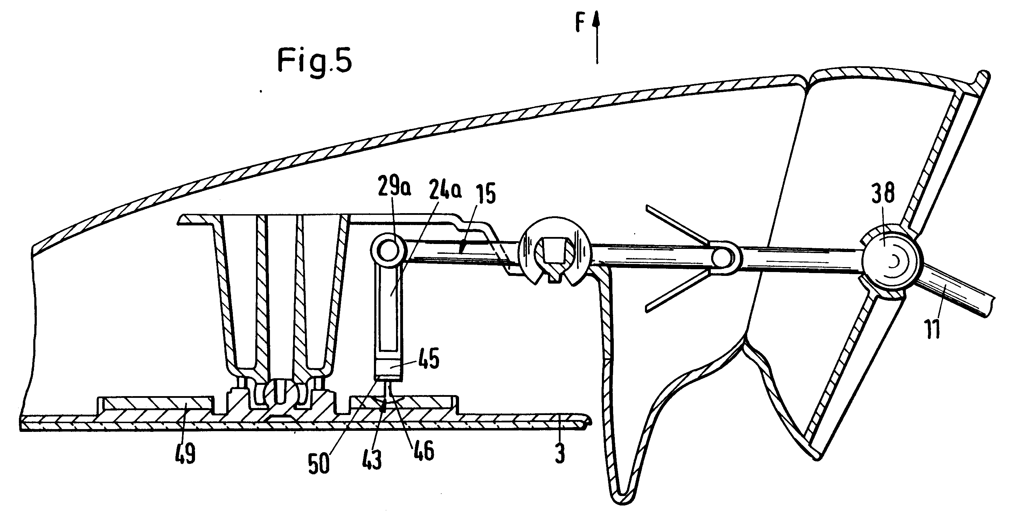

Die Fig. 5 bis 8 zeigen eine Ausführungsform, bei der die Stößel 24a, 25a mit der Glasträgerplatte 3 nicht über ein Kugelgelenk, sondern über ein spezielles Scharnier 43, 44 verbunden sind. Während bei der vorigen Ausführungsform an beiden Enden der Stößel jeweils eine Lagerschale vorgesehen ist, ist bei den Stößeln 24a, 25a nur die Lagerschale 29a, 30a vorgesehen, die auf den Lagerkugeln 27 und 28 des Querstückes 26 des Zwischenhebels 15 sitzt. Wie bei der vorigen Ausführungsform sind die Stößel 24a, 25a mit den Lagerschalen 29a, 30a vorteilhaft einstückig aus Kunststoff hergestellt. Auch das Scharnier 43 bzw. 44 ist vorteilhaft einstückig mit dem jeweiligen Stößel 24a, 25a ausgebildet. Da die Stößel 24a, 25a nur an einem Ende die Lagerschale 29a, 30a aufweisen, können Montage- und Werkzeugkosten eingespart werden.

Die beiden Scharniere 43 und 44 weisen jeweils zwei senkrecht zueinander liegende dünne Stege 45, 46 und 47, 48 auf. Diese Stege sind vorteilhaft einstückig mit den Stößeln 24a, 25a ausgebildet. Bei der dargestellten Ausführungsform sind die Stege 45 bis 48 außerdem einstückig mit einem Verstellteller 49 ausgebildet, der an der Rückseite der Glasträgerplatte 3 angeordnet ist. Dieser Verstellteller 49 kann an der Glasträgerplatte 3 beispielsweise verklebt sein. Es ist aber auch möglich, die Stege 45 bis 48 unmittelbar mit der Glasträgerplatte 3 einstückig auszubilden. In diesem Falle ist ein zusätzliches Verbindungsteil, wie der Verstellteller 49, nicht erforderlich. Die Stößel 24a, 25a, die Stege 45 bis 48 und der Verstellteller 49 oder die Glasträgerplatte 3 können kostengünstig und in einfacher Weise zusammen aus einem entsprechenden Kunststoff gespritzt werden. Dadurch werden Werkzeug- und Montagekosten eingespart.

Die jeweils rechtwinklig zueinander liegenden Stege 45 bis 48 sind federelastisch biegbar, so daß sie zum Verstellen der Glasträgerplatte 3 die erforderlichen Bewegungen ausführen können.

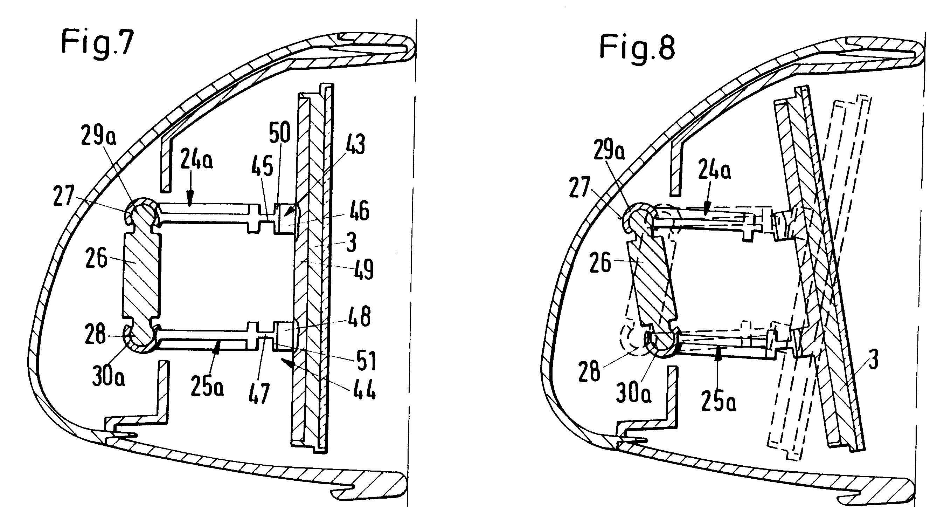

In der in den Fig. 5 und 7 dargestellten Grundstellung liegt die Glasträgerplatte 3 wiederum vertikal und senkrecht zur Fahrtrichtung F (Fig. 5) des Fahrzeuges. In dieser Lage erstrecken sich die an den Verstellteller 49 anschließenden Stege 46, 48 senkrecht (Fig. 5 und 7). Die Stege 46, 48 stehen senkrecht vom Verstellteller 49 ab und liegen in der Längsmittelebene des zugehörigen Stößels 24a, 25a. Wie die Fig. 5 und 7 weiter zeigen, schließt der vertikale Schenkel 46, 48 an ein senkrecht zu ihm liegendes Zwischenstück 50, 51 an, das parallel zur Rückseite des Verstelltellers 49 liegt und gleiche Breite wie dem Stößel 24a, 25a hat. Der Steg 46, 48 und das Zwischenstück 50, 51 haben, wie Fig. 7 zeigt, gleiche Höhe.

Auf der den Stegen 46, 48 gegenüberliegenden Seite schließt an die Zwischenstücke 50, 51 der Steg 45, 47 an. Er liegt senkrecht zum Zwischenstück 50, 51 sowie auch zum Steg 46, 48. Die Stege 45, 47 liegen in halber Höhe der Zwischenstücke 50, 51 und haben gleiche Breite wie diese. Über die Stege 45, 47 sind die Zwischenstücke 50, 51 mit parallel zu ihnen verlaufenden Endstücken 52 und 53 der Stößel 24a, 25a verbunden. Die Endstücke 52, 53 sind dicker als die Zwischenstücke 50, 51 und verleihen dadurch den Stößeln 24a, 25a eine ausreichende Festigkeit, ohne jedoch die elastische Biegbarkeit der Stege 45 bis 48 zu beeinträchtigen. Durch die Zwischenstücke 50, 51 sind die Stege 45 und 46 sowie 47 und 48 funktionell voneinander getrennt, so daß die beiden Stege jedes Stößels 24a, 25a unabhängig voneinander elastisch gebogen werden können.

Abgesehen von den beschriebenen Unterschieden ist der Außenrückblickspiegel gemäß den Fig. 5 bis 8 gleich ausgebildet wie bei der Ausführungsform nach den Fig. 1 bis 4.

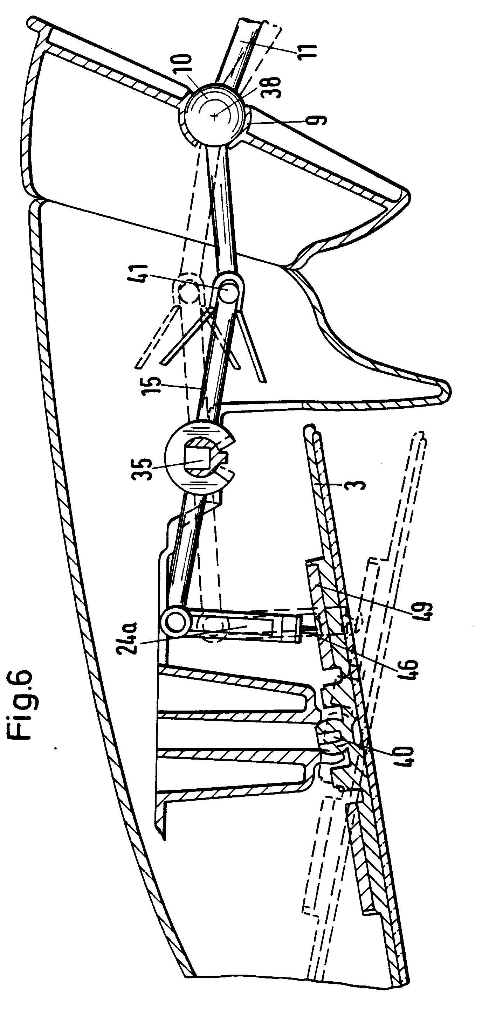

Wird der Betätigungshebel 11 (Fig. 5) um die Achse 38 geschwenkt (Fig. 6), dann wird der Zwischenhebel 15 in der beschriebenen Weise gegensinnig zum Betätigungshebel geschwenkt. Wird er, wie in Fig. 6 mit ausgezogenen Linien dargestellt, aus der Neutralstellung gemäß Fig. 5 entgegen dem Uhrzeigersinn geschwenkt, dann schwenkt der Zwischenhebel 15 um die Achse 38 im Uhrzeigersinn. Die Stößel 24a, 25a werden mitgenommen, wobei sie mittels ihrer Lagerschalen 29a, 30a relativ zum Zwischenhebel 15 schwenken. Gleichzeitig wird auch die Glasträgerplatte 3 um die Achse 40 geschwenkt. Infolge der Anbindung der Stege 46 und 48 der Stößel 24a, 25a an den Verstellteller 49 werden hierbei die Stege 46 und 48 elastisch gebogen. Die Zwischenstücke 50 und 51 nehmen hierbei die Verformungskräfte auf und halten sie von den Stegen 45 und 47 fern.

Wird der Betätigungshebel 11 aus der Neutralstellung gemäß Fig. 5 im Uhrzeigersinn gedreht, dann wird der Zwischenhebel 15 entgegen dem Uhrzeigersinn um die Achse 38 geschwenkt (gestrichelte Linien in Fig. 6). In diesem Falle wird die Glasträgerplatte 3 durch die Stößel 24a, 25a in die mit gestrichelten Linien in Fig. 6 dargestellte Lage verschwenkt. Die Laschen 46 und 48 werden in diesem Falle in die andere Richtung elastisch gebogen.

Der Betätigungshebel 11 kann auch mittels seines Kugelgelenkes 9, 10 gedreht werden. Der Zwischenhebel 15 wird dann in der beschriebenen Weise über das Querstück 41 drehend mitgenommen. Je nach Drehrichtung (gestrichelte und ausgezogene Linien in Fig. 8) wird die Glasträgerplatte 3 nach vorn bzw. nach hinten geneigt. Wie bei der vorigen Ausführungsform werden die Stößel 24a, 25a hierbei entsprechend verschoben und verschwenkt. Je nach Neigungslage der Glasträgerplatte 3 werden die Stege 45 und 47 elastisch nach unten oder nach oben gebogen, während die Stößel 24a, 25a am anderen Ende mit ihren Lagerschalen 29a, 30a auf den Lagerkugeln 27 und 28 des Endstückes 26 des Zwischenhebels 15 drehen. Die Verformungskräfte werden hierbei von den Zwischenstücken 50, 51 und den Endstücken 52 und 53 aufgenommen.

Die Glasträgerplatte 3 kann selbstverständlich auch gleichzeitig in der Horizontalen und in der Vertikalen verstellt werden, so daß die Glasträgerplatte in jede gewünschte Lage gebracht werden kann. Hierbei werden dann beide Stege 45 und 46 sowie 47 und 48 gleichzeitig elastisch verformt. Da sich zwischen ihnen die Zwischenstücke 50, 51 befinden, die zu beiden Stegen 45 und 46 bzw. 47 und 48 senkrecht liegen, werden die beiden Stege beiderseits jedes Zwischenstückes nicht voneinander beeinflußt, so daß die Glasträgerplatte genau in die gewünschte Lage verstellt werden kann.

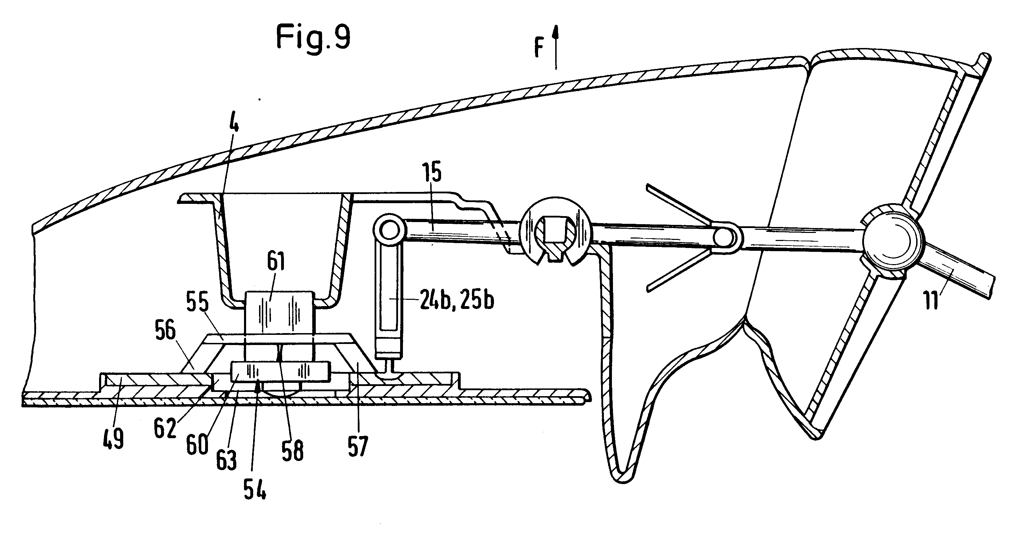

Die Ausführungsform nach den Fig. 9 bis 12 ist ähnlich ausgebildet wie bei der vorigen Ausführungsform. Jedoch ist das Kugelgelenk 5 durch ein vorzugsweise aus Kunststoff bestehendes Gelenk 54 ersetzt. Es ist vorteilhaft einstückig mit dem Verstellteller 49 ausgebildet, der an der Rückseite der Glasträgerplatte 3 befestigt ist. Das Gelenk 54 kann aber auch einstückig mit der Glasträgerplatte 3 ausgebildet sein.

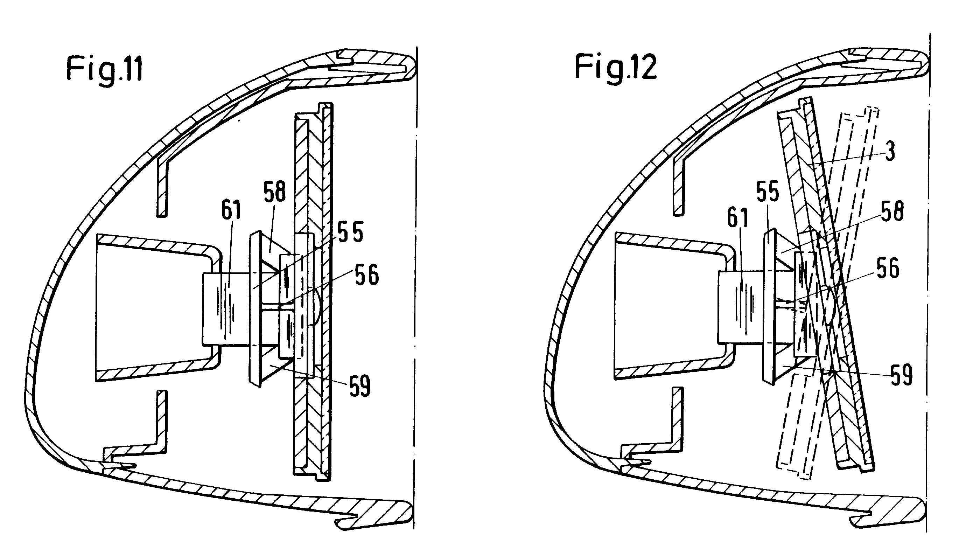

Das Gelenk 54 hat einen mit Abstand vom Verstellteller 49 liegenden Ring 55, der vorteilhaft Kreisform hat. Über seinen Umfang ist er mit vier Stegen 56 bis 59 (Fig. 9 und 11) versehen, die in Winkelabständen von 90° voneinander angeordnet sind. Jeweils diametral einander gegenüberliegende Stege 56 und 57 bzw. 58 und 59 liegen jeweils in einer Diametralebene des Ringes 55. Die Stege 56 und 57 liegen in einer senkrecht zur Fahrtrichtung F liegenden Ebene, wahrend die Stege 58 und 59 in einer in Fahrtrichtung F sich erstreckenden Ebene liegen. Die Stege 56 bis 59 sind vom Ring 55 aus jeweils schräg nach außen gerichtet.

Die Stege 56 und 57 schließen an die Rückseite des Verstelltellers 49 an, während die Stege 58 und 59 mit einem Kopfstück 60 eines Halters 61 verbunden sind (Fig. 9). Er ist mit dem Träger 4 fest verbunden, der Teil des Rahmens des Spiegelgehäuses ist. Das Kopfstück 60 ragt durch eine Öffnung 62 im Verstellteller 49 in eine Vertiefung 63 in der Rückseite der Glasträgerplatte 3.

Die vier Stege 56 bis 59 sind biegeelastisch ausgebildet und jeweils quer zu ihrer Längsrichtung biegbar. Der Ring 55 ist biegesteif ausgebildet und nimmt die beim elastischen Biegen der Stege 56 bis 59 auftretenden Kräfte auf.

Um die hohe Festigkeit zu erreichen, ist die radiale Breite des Ringes 55 größer als seine Dicke.

Die Glasträgerplatte 3 läßt sich wiederum mit den Stößeln 24b, 25b, die gleich ausgebildet sind wie beim vorigen Ausführungsbeispiel, in die verschiedenen Lagen verstellen, wenn der Betätigungshebel 11 entsprechend verschwenkt oder verdreht wird. Hierbei werden die rechtwinklig zueinander liegenden Stege der Stößel 24b, 25b in der anhand des vorigen Ausführungsbeispieles beschriebenen Weise elastisch verformt. Zusätzlich werden aber auch die Stege 56 bis 59 des Gelenkes 54 elastisch verformt.

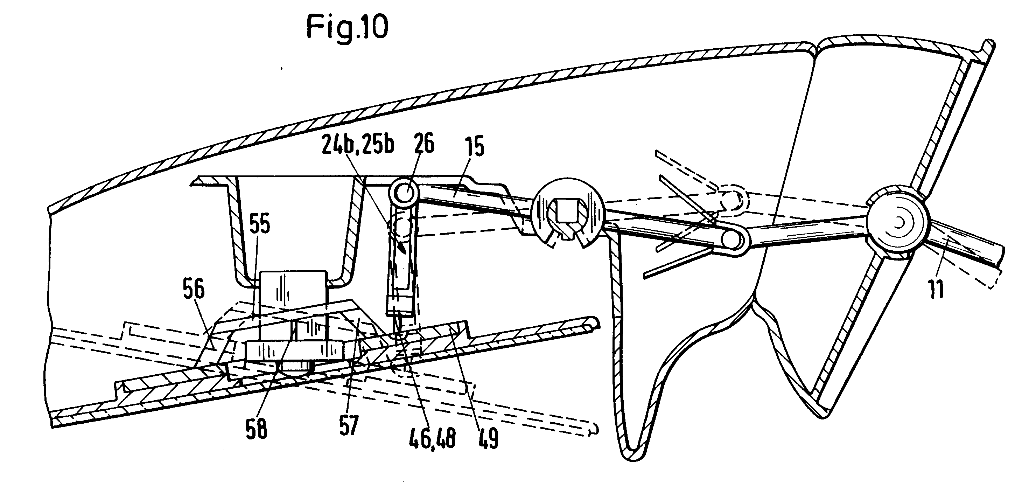

In der Darstellung gemäß den Fig. 9 und 11 nimmt die Glasträgerplatte 3 ihre Neutralstellung ein, in der die Glasträgerplatte senkrecht zur Fahrtrichtung F und vertikal liegt. Wird nun der Betätigungshebel 11 in der beschriebenen Weise geschwenkt, dann wird die Glasträgerplatte um eine gedachte vertikale Achse des Gelenkes 54 in die in Fig. 10 mit ausgezogenen und gestrichelten Linien dargestellte Schwenklage verstellt, je nach Schwenkrichtung des Betätigungshebels 11. Bei dieser Schwenkbewegung werden die Stege 58 und 59 elastisch gebogen, während die senkrecht zu ihnen liegenden Stege 56 und 57 unverformt bleiben.

Bei dieser Schwenkbewegung werden auch, wie beim vorigen Ausführungsbeispiel, die an den Verstellteller 49 anschließenden Stege 46, 48 der Stößel 24b, 25b elastisch gebogen.

Wie bei den vorigen Ausführungsbeispielen kann der Spiegelglasträger 3 außerdem in seiner Neigung verstellt werden (Fig. 12). Hierzu wird der Betätigungshebel 11 entsprechend gedreht, wodurch in der beschriebenen Weise der Zwischenhebel 15 mitgedreht wird. Dies wiederum hat zur Folge, daß das Querstück 26 des Zwischenhebels 15 geneigt wird, wodurch die an beiden Enden dieses Querstückes angeschlossenen Stößel 24b, 25b relativ zueinander verschoben werden. Auf diese Weise wird der Spiegelglasträger 3 in seiner Neigung eingestellt. In diesem Falle werden die in einer Horizontalebene liegenden Stege 56, 57 elastisch gebogen. Die auftretenden Verformungskräfte werden vom Ring 55 zuverlässig aufgenommen, der vom Halter 61 durchsetzt wird.

Wird der Spiegelglasträger 3 gleichzeitig vertikal und horizontal verstellt, werden sämtliche Stege 56 bis 59 elastisch gebogen.

Bei sämtlichen Ausführungsformen ist der Zwischenhebel 15 über die beiden Stößel 24, 25; 24a, 25a; 24b, 25b mit der Glasträgerplatte 3 entweder unmittelbar oder über den Verstellteller 49 oder ein ähnliches Teil verbunden. In der Neutralstellung der Glasträgerplatte 3, in der sie vertikal und senkrecht zur Fahrtrichtung F liegt, erstrecken sich die Stößel von ihrer glasträgerseitigen Anlenkstelle aus senkrecht bis zum Zwischenhebel 15. Wird der Zwischenhebel 15 durch den Betätigungshebel 11 verstellt, bewegen sich die Anlenkpunkte der Stößel am Zwischenhebel 15 auf einer kreisförmigen Bahn. Sind die Stößel 24a, 25a; 24b, 25b an die Glasträgerplatte 3 bzw. den Verstellteller 49 mit den flachen Stegen angeschlossen, werden diese Stege, da sie starr mit der Glasträgerplatte oder deren Verstellteller verbunden sind, in der beschriebenen Weise elastisch gebogen.

## Patentansprüche

1. Außenrückblickspiegel für Fahrzeuge, vorzugsweise für Kraftfahrzeuge, mit einem Gehäuse (2), in dem eine Glasträgerplatte (3) um zwei zueinander senkrechte Achsen mittels eines Betätigungshebels (11) schwenkbar ist, der mit einem Zwischenhebel (15) gelenkig verbunden ist, der über zwei Stößel (24, 25; 24a, 25a; 24b, 25b) gelenkig mit der Glasträgerplatte (3) verbunden ist, die auf einem Gelenk (5) mit Abstand von der Anlenkstelle der Stößel (24, 25; 24a, 25a; 24b, 25b) gelagert ist, die an einem Ende eine Lagerschale (29, 30; 29a, 30a) aufweisen, mit der sie auf jeweils einer Lagerkugel (27, 28) sitzen,
dadurch gekennzeichnet, daß der Zwischenhebel (15) ein zweiarmiger Hebel ist, der mit einem quer zu ihm sich erstreckenden Querstück (26) versehen ist, an dessen Enden die Lagerkugeln (27, 28) vorgesehen sind.

2. Außenrückblickspiegel nach Anspruch 1,
dadurch gekennzeichnet, daß das Querstück (26) am freien Ende des Zwischenhebels (15) vorgesehen ist, der vorzugsweise kugelgelenkig gelagert ist.

3. Außenrückblickspiegel nach Anspruch 1 oder 2,
dadurch gekennzeichnet, daß die Stößel (24, 25) am anderen Ende eine weitere Lagerschale (35, 36) aufweisen, mit der sie auf jeweils einer der Glasträgerplatte (3) zugeordneten Lagerkugel (31, 32) sitzen.

4. Außenrückblickspiegel nach einem der Ansprüche 1 bis 3,
dadurch gekennzeichnet, daß die Stößel (24, 25; 24a, 25a; 24b, 25b) zumindest mit den zwischenhebelseitigen Lagerschalen (29, 30; 29a, 30a) einstückig ausgebildet sind.

5. Außenrückblickspiegel, insbesondere nach einem der Ansprüche 1 bis 4,
dadurch gekennzeichnet, daß die Stößel (24a, 25a; 24b, 25b) mit jeweils einem vorzugsweise senkrecht zur Glasträgerplatte (3) liegenden Federsteg (46, 48) an die Glasträgerplatte angeschlossen sind.

6. Außenrückblickspiegel nach Anspruch 5,
dadurch gekennzeichnet, daß die Stößel (24a, 25a; 24b, 25b) einen weiteren vorzugsweise ebenfalls senkrecht zur Glasträgerplatte (3) liegenden Federsteg (45, 47) haben, der senkrecht zum anderen Federsteg (46, 48) liegt, und daß vorzugsweise die der Glasträgerplatte (3) zugewandten Federstege (46, 48) in einer Vertikalebene und die weiteren Federstege (45, 47) in einer Horizontalebene liegen.

7. Außenrückblickspiegel nach Anspruch 5 oder 6,
dadurch gekennzeichnet, daß die beiden Federstege (45 bis 48) jedes Stößels (24a, 25a; 24b, 25b) durch ein Zwischenstück (50, 51) voneinander getrennt sind, das vorzugsweise senkrecht zu den beiden Federstegen (45 bis 48) jedes Stößels (24a, 25a; 24b, 25b) liegt.

8. Außenrückblickspiegel nach Anspruch 7,
dadurch gekennzeichnet, daß das Zwischenstück (50, 51) stegförmig und/oder biegesteif ausgebildet ist.

9. Außenrückblickspiegel nach einem der Ansprüche 5 bis 8,
dadurch gekennzeichnet, daß die beiden Federstege (45 bis 48) jedes Stößels (24a, 25a; 24b, 25b) in zueinander senkrechten Richtungen elastisch biegbar sind.

10. Außenrückblickspiegel, insbesondere nach einem der Ansprüche 1 bis 9,
dadurch gekennzeichnet, daß das Gelenk (54) für die Glasträgerplatte (3) vorzugsweise stegförmige Federteile (56 bis 59) aufweist, die in zueinander senkrechten Richtungen elastisch biegbar und vorzugsweise in zueinander senkrecht liegenden Ebenen angeordnet sind.

11. Außenrückblickspiegel nach Anspruch 10,
dadurch gekennzeichnet, daß die Federteile (56 bis 59) mit einem Ende an einem Ring (55) befestigt, vorzugsweise einstückig mit ihm ausgebildet und vorzugsweise in Winkelabständen von 90° über den Umfang des Ringes (55) verteilt angeordnet sind.

12. Außenrückblickspiegel nach Anspruch 11,
dadurch gekennzeichnet, daß die Federteile (56 bis 59) in Radialebenen des Ringes (55) liegen.

13. Außenrückblickspiegel nach Anspruch 11 oder 12,
dadurch gekennzeichnet, daß zwei diametral einander gegenüberliegende Federteile (56, 57) mit der Glasträgerplatte (3) und die beiden anderen, diametral einander gegenüberliegenden Federteile (58, 59) gehäuseseitig befestigt sind und daß vorzugsweise die der Glasträgerplatte (3) zugeordneten Federteile (56, 57) in einer horizontalen Radialebene des Ringes (55) liegen.

14. Außenrückblickspiegel nach Anspruch 13,
dadurch gekennzeichnet, daß die gehäuseseitigen Federteile (58, 59) an einem vorzugsweise durch den Ring (55) ragenden Halter (61) befestigt, vorzugsweise einstückig mit ihm ausgebildet sind, der an einem Rahmen (23) des Gehäuses (2) befestigt ist.

15. Außenrückblickspiegel nach einem der Ansprüche 11 bis 14,
dadurch gekennzeichnet, daß sich die Federteile (56 bis 59) vom Ring (55) aus schräg nach außen erstrecken.

## Claims

1. An external rear-view mirror for vehicles, preferably for motor vehicles, with a housing (2) in which a glass-support plate (3) is pivotable by means of an actuating lever (11) about two axes at a right angle to each other, the actuating lever (11) being connected in an articulated manner to an intermediate lever (15) which is connected in an articulated manner by way of two rods (24, 25; 24a, 25a; 24b, 25b) to the glass-support plate (3) which is mounted on a joint (5) at a distance from the articulation point of the rods (24, 25; 24a, 25a; 24b, 25b) comprising at one end thereof a bearing shell (29, 30; 29a, 30a) by which they are each mounted on a respective ball bearing (27, 28), **characterized in that** the intermediate lever (15) is a two-armed lever provided with a transverse member (26) which extends transversely thereto and at the ends of which the ball bearings (27, 28) are provided.

2. An external rear-view mirror according to Claim 1, **characterized in that** the transverse member (26) is provided at the free end of the intermediate lever (15) which is preferably mounted on a ball-and-socket joint.

3. An external rear-view mirror according to Claim 1 or 2, **characterized in that** the rods (24, 25) are provided at the other end thereof with a further bearing shell (35, 36) by which they are each mounted on a respective ball bearing (31, 32) associated with the glass-support plate (3).

4. An external rear-view mirror according to one of Claims 1 to 3, **characterized in that** the rods (24, 25; 24a, 25a; 24b, 25b) are formed integrally at least with the bearing shells (29, 30; 29a, 30a) on the intermediate lever.

5. An external rear-view mirror, in particular according to one of Claims 1 to 4, **characterized in that** the rods (24a, 25a; 24b, 25b) are each attached to the glass-support plate (3) by a respective resilient web (46, 48) situated preferably at a right angle to the glass-support plate.

6. An external rear-view mirror according to Claim 5, **characterized in that** the rods (24a, 25a; 24b, 25b) have a further resilient web (45, 47) which is likewise situated preferably at a right angle to the glass-support plate (3) and which is situated at a right angle to the other resilient web (46, 48), and the resilient webs (46, 48) facing the glass-support plate (3) are preferably situated in a vertical plane and the further resilient webs (45, 47) are preferably situated in a horizontal plane.

7. An external rear-view mirror according to Claim 5 or 6, **characterized in that** the two resilient webs (45 to 48) of each rod (24a, 25a; 24b, 25b) are separated from each other by an intermediate member (50, 51) which is preferably situated at a right angle to the two resilient webs (45 to 48) of each rod (24a, 25a; 24b, 25b).

8. An external rear-view mirror according to Claim 7, **characterized in that** the intermediate member (50, 51) is formed in a web-shaped and/or rigid manner.

9. An external rear-view mirror according to one of Claims 5 to 8, **characterized in that** the two resilient webs (45 to 48) of each rod (24a, 25a; 24b, 25b) are resiliently flexible in directions at right angles to one another.

10. An external rear-view mirror, in particular according to one of Claims 1 to 9, **characterized in that** the joint (54) for the glass-support plate (3) preferably comprises web-shaped spring parts (56 to 59) which are resiliently flexible in directions at right angles to one another and which are preferably arranged in planes situated at right angles to one another.

11. An external rear-view mirror according to Claim 10, **characterized in that** the spring parts (56 to 59) are secured at one end to a ring (55), are preferably formed integrally therewith and are preferably distributed around the periphery of the ring (55) at angular intervals of 90°.

12. An external rear-view mirror according to Claim 11, **characterized in that** the spring parts (56 to 59) are situated in radial planes of the ring (55).

13. An external rear-view mirror according to Claim 11 or 12, **characterized in that** two spring parts (56, 57) diametrically opposite each other are secured to the glass-support plate (3) and the two other spring parts (58, 59) diametrically opposite each other are secured on the housing, and the spring parts (56, 57) associated with the glass-support plate (3) are preferably situated in a horizontal radial plane of the ring (55).

14. An external rear-view mirror according to Claim 13, **characterized in that** the spring parts (58, 59) on the housing are secured to a retaining means (61) preferably projecting through the ring (55) and are preferably formed integrally therewith, the retaining means (61) being secured to a frame (23) of the housing (2).

15. An external rear-view mirror according to one of Claims 11 to 14, **characterized in that** the spring parts (56 to 59) extend obliquely outwards from the ring (55).

## Revendications

1. Rétroviseur extérieur pour véhicules, de préférence pour véhicules automobiles, comportant un boîtier (2) dans lequel une plaque porte-miroir (3) est pivotante autour de deux axes perpendiculaires l'un à l'autre au moyen d'un levier d'actionnement (11) qui est relié de manière articulée à un levier intermédiaire (15) qui est relié de manière articulée par l'intermédiaire de deux poussoirs (24, 25 ; 24a, 25a ; 24b, 25b) à la plaque porte-miroir (3) qui est montée sur une articulation (5) à distance du point d'articulation des poussoirs (24, 25 ; 24a, 25a ; 24b, 25b), lesquels présentent à une extrémité un coussinet (29, 30 ; 29a, 30a) avec lequel ceux-ci reposent chacun sur une bille de montage (27, 28), caractérisé en ce que le levier intermédiaire (15) est un levier à deux bras qui est pourvu d'une pièce transversale (26) s'étendant transversalement audit levier, à l'extrémité de laquelle sont prévues les billes de montage (27, 28).

2. Rétroviseur extérieur selon la revendication 1, caractérisé en ce que la pièce transversale (26) est prévue à l'extrémité libre du levier intermédiaire (15) qui est monté de préférence par une articulation à bille.

3. Rétroviseur extérieur selon l'une ou l'autre des revendications 1 et 2, caractérisé en ce que les poussoirs (24, 25) présentent sur l'autre extrémité un autre coussinet (35, 36) avec lequel ceux-ci reposent chacun sur une bille de montage (31, 32) associée à la plaque porte-miroir (3).

4. Rétroviseur extérieur selon l'une quelconque des revendications 1 à 3, caractérisé en ce que les poussoirs (24, 25 ; 24a, 25a ; 24b, 25b) sont réalisés d'une seule pièce au moins avec les coussinets (29, 30 ; 29a, 30a) côté levier intermédiaire.

5. Rétroviseur extérieur en particulier selon l'une quelconque des revendications 1 à 4, caractérisé en ce que les poussoirs (24a, 25a ; 24b, 25b) sont raccordés à la plaque porte-miroir avec au moins une traverse élastique (46, 48) située de préférence perpendiculairement à la plaque porte-miroir (3).

6. Rétroviseur extérieur selon la revendication 5, caractérisé en ce que les poussoirs (24a, 25a ; 24b, 25b) ont une autre traverse élastique (45, 47) située également de préférence perpendiculairement à la plaque porte-miroir (3), ladite autre traverse élastique étant perpendiculaire à la première traverse élastique (46, 48), et en ce que de préférence, les traverses élastiques (46, 48) orientées vers la plaque porte-miroir (3) se trouvent dans un plan vertical, et les autres traverses élastiques (45, 47) se trouvent dans un plan horizontal.

7. Rétroviseur extérieur selon l'une ou l'autre des revendications 5 et 6, caractérisé en ce que les deux traverses (45 à 48) de chaque poussoir (24a, 25a ; 24b, 25b) sont séparées l'une de l'autre par une pièce intermédiaire (50, 51) qui est de préférence perpendiculaire aux deux traverses élastiques (45 à 48) de chaque poussoir (24a, 25a ; 24b, 25b).

8. Rétroviseur extérieur selon la revendication 7, caractérisé en ce que la pièce intermédiaire (50, 51) est réalisée en forme de traverse et/ou en ce qu'elle est rigide à la torsion.

9. Rétroviseur extérieur selon l'une quelconque des revendications 5 à 8, caractérisé en ce que les deux traverses élastiques (45 à 48) de chaque poussoir (24a, 25a ; 25b, 25b) sont élastiquement flexibles dans des directions perpendiculaires l'une par rapport à l'autre.

10. Rétroviseur extérieur selon l'une quelconque des revendications 1 à 9, caractérisé en ce que l'articulation (54) pour la plaque porte-miroir (3) présente des éléments élastiques (56 à 59) de préférence en forme d'entretoises (56 à 59), lesquels sont élastiquement flexibles dans des directions perpendiculaires les uns par rapport aux autres et lesquels sont agencés de préférence dans des plans perpendiculaires les uns aux autres.

11. Rétroviseur extérieur selon la revendication 10, caractérisé en ce que les éléments élastiques (56 à 59) sont fixés avec une extrémité sur une bague (55), sont réalisés de préférence d'une seule pièce avec celle-ci et sont répartis de préférence sur la périphérie de la bague (55) avec des espacements angulaires de 90°.

12. Rétroviseur extérieur selon la revendication 11, caractérisé en ce que les éléments élastiques (56 à 59) se trouvent dans des plans radiaux de la bague (55).

13. Rétroviseur extérieur selon l'une ou l'autre des revendications 11 et 12, caractérisé en ce que deux éléments élastiques (56, 57) diamétralement opposés l'un à l'autre sont fixés avec la plaque porte-miroir (3), en ce que les deux autres éléments élastiques (58, 59) diamétralement opposés l'un à l'autre sont fixés côté boîtier, et en ce que de préférence, les éléments élastiques (56, 57) associés à la plaque porte-miroir (3) se trouvent dans un plan radial horizontal de la bague (55).

14. Rétroviseur extérieur selon la revendication 13, caractérisé en ce que les éléments élastiques (58, 59) côté boîtier sont fixés sur un support (61) faisant saillie de préférence à travers la bague (55), en ce qu'ils sont réalisés de préférence d'une seule pièce avec celle-ci, ledit support étant fixé sur un cadre (23) du boîtier (2).

15. Rétroviseur extérieur selon l'une quelconque des revendications 11 à 14, caractérisé en ce que les éléments élastiques (56 à 59) s'étendent en oblique vers l'extérieur depuis la bague (55).
